# EUROPÄISCHE PATENTSCHRIFT

(11) **EP 3 173 206 B1**
(45) Veröffentlichungstag und Bekanntmachung des Hinweises auf die Patenterteilung: **31.10.2018**
(21) Anmeldenummer: 16198567.6
(22) Anmeldetag: 14.11.2016
(51) Int. Cl.: B29C 45/16, B29C 45/00, B29L 31/00

(54) **VERFAHREN ZUM HERSTELLEN EINES HAUSHALTSGERÄTEBAUTEILS ALS DICKWAND-BAUTEIL SOWIE HAUSHALTSGERÄTEBAUTEIL**
METHOD FOR PRODUCING A HOUSEHOLD DEVICE COMPONENT AS A THICK WALL COMPONENT AND HOUSEHOLD DEVICE COMPONENT
PROCÉDÉ DE FABRICATION D'UN COMPOSANT D'APPAREIL MÉNAGER EN TANT QUE COMPOSANT À PAROI ÉPAISSE AINSI QUE COMPOSANT D'APPAREIL MÉNAGER

(30) Priorität: 27.11.2015 DE 102015223582
(43) Veröffentlichungstag der Anmeldung: 31.05.2017
(73) Patentinhaber: BSH Hausgeräte GmbH, 81739 München (DE)
(72) Erfinder: Furth, Brigitte, 97318 Kitzingen (DE); Lux, Denis, 89520 Heidenheim (DE); Claaß, Elena, 73312 Geislingen (DE); Fink, Andrea, 89547 Gerstetten (DE); Holt, Sven, 89075 Ulm (DE)

(56) Entgegenhaltungen:
- EP-A1- 2 333 421
- JP-A- 2003 053 336

## Beschreibung

Die Erfindung betrifft ein Verfahren zum Herstellen eines Haushaltsgerätebauteils aus Kunststoff durch ein Spritzgießen, bei welchem ein Vorspritzling als erste Schicht erzeugt wird und auf die erste Schicht zumindest eine zweite Schicht aufgespritzt wird. Darüber hinaus betrifft die Erfindung auch ein Haushaltsgerätebauteil.

Das Herstellen von Haushaltsgerätebauteilen und somit von Bauteilen für ein Haushaltsgerät in Form von Spritzguß-Bauteilen ist aus dem Stand der Technik bekannt. So ist aus der DE 10 2008 042 815 A1 bekannt, dass ein Formteil für ein Haushaltsgerät als Griffhalter, Handgriff, Türabschlussleiste oder Dekorelement ausgebildet sein kann. Das Formteil kann jedoch auch als Zierleiste oder Türabstellfach oder als Dekorleiste für eine Kühlgutschale oder für einen Zwischenboden ausgebildet sei.

Die EP 2 333 421 A1 offenbart ein Anzeigeflächenelement, welches aus einer einstückigen Platte besteht, die transparente und opake Plattenbereiche aufweist. Die Platte besteht aus zwei Schichten, welche mittels Spritzguss miteinander innig verbunden sind.

Die JP 2003 053 336 A offenbart einen Wasserfilter mit zwei Schichten, welche aufeinandergespritzt sind, wobei jede der Schichten zwischen 1,5mm und 3mm ausgebildet ist.

Das Formteil wird als Spritzguß-Teil hergestellt und es wird ein Vorspritzling als Spritzguß-Teil bereitgestellt. Dieser Vorspritzling wird mit einer Schicht überzogen, die insbesondere zwischen 0,8 mm und 1,2 mm trägt. Das dortige Formteil ist dünnwandig ausgebildet.

Gerade für spezifische Haushaltsgerätebauteile ist jedoch aufgrund der Stabilitätsanforderungen und dem Einsatzgebiet im Haushaltsgerät die Dünnwandigkeit nicht ausreichend.

Bei dickwandigeren Bauteilen, die somit Wanddicken größer 4 mm aufweisen, ist die Herstellung in einem Fertigungsschritt und somit in einem Spritzgussvorgang bekannt. Ein wesentlicher Nachteil bei diesen dickeren Bauteilen ist dann jedoch darin zu sehen, dass der Abkühlprozeß sehr lange dauert. Ein ganz entscheidender Nachteil dieser dickwandigen Bauteile, die in einem einzigen Spritzgussvorgang hergestellt werden, ist dann der relativ große Verzug beim Abkühlen. Dies führt unter anderem auch zu einem entsprechenden Ausschuss.

Es ist Aufgabe der vorliegenden Erfindung, ein Haushaltsgerätebauteil sowie ein entsprechendes Verfahren zu dessen Herstellung zu schaffen, bei welchem die Dickwandigkeit zumindest verzugsreduzierter ausgebildet werden kann und der Herstellungsprozess dennoch relativ schnell durchgeführt werden kann.

Diese Aufgabe wird durch ein Verfahren und ein Haushaltsgerätebauteil gemäß den unabhängigen Ansprüchen gelöst.

Bei dem erfindungsgemäßen Verfahren zum Herstellen eines Haushaltsgerätebauteils aus Kunststoff wird dieses durch Spritzgießen erzeugt. Es wird dabei ein Vorspritzling als erste Schicht erzeugt und bereitgestellt und auf diese erste Schicht wird zumindest eine zweite Schicht aufgespritzt. Ein wesentlicher Gedanke der Erfindung ist darin zu sehen, dass das Haushaltsgerätebauteil als Dickwand-Bauteil gespritzt wird. Diese Dickwandigkeit wird dadurch ausgebildet, dass das Haushaltsgerätebauteil zumindest bereichsweise mit einer Schichtdicke an einer Stelle mit zumindest diesen zwei Schichten erzeugt wird, die größer 4 mm beträgt. Es wird die erste Schicht mit einer Schichtdicke größer 2 mm und/oder die zweite Schicht mit einer Schichtdicke größer 2 mm gespritzt. Es kann somit vorgesehen sein, dass dieses Dickwand-Bauteil in Bereichen, an denen die zumindest zwei Schichtdicken gespritzt sind, derart erzeugt wird, dass beide Schichten eine Schichtdicke größer 2 mm aufweisen. Es kann jedoch auch vorgesehen sein, dass zumindest eine der beiden Schichten mit einer Schichtdicke kleiner 2 mm erzeugt wird, insbesondere beispielsweise mit minimal 1,8 mm oder minimal 1,9 mm oder mit einer minimalen Schichtdicke zwischen 1,8 mm und 2 mm. Die an dieser Stelle dann weitere Schicht ist dann konsequenterweise entsprechend größer, so dass die Dickwandigkeit im Hinblick auf die gesamte Schichtdicke dieser zumindest zwei Schichtdicken von größer 4 mm erhalten wird. Durch diese Vorgehensweise wird also ein Dickwand-Bauteil hergestellt, welches nicht in einem einzigen Herstellungsprozess spritzgegossen wird, sondern in mehreren Schichten erzeugt wird. Es wird dabei vorgesehen, dass nach jeder Schicht ein Abkühlen durchgeführt wird, bevor die nächste Schicht dann gespritzt beziehungsweise auf diese vorhergehende Schicht oder die vorhergehenden Schichten aufgespritzt wird. Indem somit ein Schichtenaufbau eines derartigen, wertemäßig definierten, dickwandigen Bauteils vollzogen wird, wird die Formstabilität vergrößert und dennoch die Dauer des Herstellungsprozesses reduziert. Da bei den mehreren Schichten das Abkühlen wesentlich schneller erfolgt, als bei einem entsprechenden dickwandigen Bauteil, welches in einem Spritzvorgang und somit in einer einzigen Schicht hergestellt wird, und darüber hinaus bei diesen mehreren einzelnen Schichten beim Abkühlen der Verzug deutlich geringer ist, wird durch die Erfindung eine wesentliche Verbesserung beim Herstellen derartiger dickwandiger spritzgegossener Haushaltsgerätebauteile erzielt.

Insbesondere wird dies erreicht, wenn die zumindest zwei Schichten jeweils mit einer Schichtdicke größer 2 mm hergestellt werden.

Insbesondere werden die zumindest zwei Schichten über zumindest 60 %, insbesondere zumindest 80 %, insbesondere zumindest 95 %, des gesamten Oberflächenbereichs des herzustellenden Haushaltsgerätebauteils hergestellt. Insbesondere wird die Schichtdicke von größer 4 mm über zumindest 60 %, insbesondere zumindest 80 %, insbesondere zumindest 95 %, des gesamten Oberflächenbereichs, an dem zumindest zwei Schichten ausgebildet werden, erzeugt.

Es wird auf einer Oberseite einer nicht äußeren Schicht des Schichtenverbunds, aus dem das Haushaltsgerätebauteil gespritzt wird, eine Bedruckung aufgebracht, und auf die Bedruckung und die Oberseite wird zumindest eine weitere Schicht des Schichtenverbunds aufgespritzt. Dadurch kann durch die Bedruckung eine Information quasi integral in das Haushaltsgerätebauteil eingebracht werden, welche dann im fertiggestellten Zustand des Haushaltsgerätebauteils durch die zumindest eine weitere Schicht hindurch erkannt werden kann. Diese darzustellende Information ist somit geschützt eingebracht und kann somit nicht beschädigt werden.

Alternativ oder ergänzend wird auf einer Oberseite einer nicht äußeren Schicht des Schichtenverbunds, aus dem das Haushaltsgerätebauteil gespritzt wird, ein Zusatzteil, welches eine Information darstellt, fixiert wird, welches somit bereits vor dem Aufkleben als endgültige vollständige Komponente vorhanden ist und gegenständlich bereits hergestellt vorliegt. Das Fixieren kann insbesondere ein Ankleben oder ein Anschweißen oder ein Anstecken bzw. Anklipsen sein. Dieses Zusatzteil ist insbesondere erhaben über die Oberseite der nicht äußeren Schicht überstehend, wobei auf das Zusatzteil auf die Oberseite zumindest eine weitere Schicht des Schichtenverbunds aufgespritzt wird. Auch hier gelten dann die bereits genannten Vorteile, wie sie bei der Aufbringung einer Bedruckung genannt wurden.

Alternativ oder ergänzend wird in einer Oberseite einer nicht äußeren Schicht des Schichtenverbunds, aus dem das Haushaltsgerätebauteil gespritzt wird, eine Vertiefung erzeugt, in welche ein Zusatzmaterial eingebracht wird. Auf das Zusatzmaterial und die Oberseite wird zumindest eine weitere Schicht des Schichtenverbunds aufgespritzt. Das Zusatzmaterial kann erhaben über die Oberseite der nicht äußeren Schicht aufgebracht werden oder bündig mit einer Oberseite aufgebracht werden. Auch gelten dann für dieses Ausführungsbeispiel die Vorteile, wie sie oben bei der Ausführung mit der Bedruckung genannt wurden, entsprechend. Auch durch die Form der Vertiefung und durch das Zusatzmaterial wird eine Information dargestellt.

Besonders vorteilhaft ist das Verfahren, wenn die zumindest zwei Schichten mit jeweils einer Schichtdicke zwischen größer 2 mm und 3 mm hergestellt werden, vorzugsweise zwischen 2,2 mm und 2,8 mm, insbesondere zwischen 2,3 mm und 2,7 mm, insbesondere zwischen 2,5 mm und 2,6 mm.

Durch diese spezifischen Wertintervalle wird jede Schicht für sich betrachtet mit einer individuellen Stabilität geschaffen und eine entsprechende ausreichende mechanische Beanspruchung erlaubt. Darüber hinaus ist durch diese Schichtdickenmaße bei allen diesbezüglichen entsprechend zu spritzenden Schichtdicken auch das Abkühlen relativ schnell möglich, so dass sich daraus auch für die einzelnen Schichten die oben genannten Vorteile besonders ergeben. Darüber hinaus ist durch diese Ausgestaltung dann auch der Abkühlprozess im Vergleich zu den vorhergehenden erzeugten Schichten gleich lang oder relativ gleich lang, so dass das jeweilige Verhalten beim Abkühlen entsprechend dem Ablauf bei der Erzeugung der vorhergehenden Schicht entspricht. Dadurch lassen sich unerwünschte Effekte bei der Herstellung des Haushaltsgerätebauteils entsprechend gut vorhersagen und kompensieren beziehungsweise bedarfsgerecht entgegengewirkt werden. Insbesondere sind dadurch auch die Formstabilität und die Formpräzision des herzustellenden Haushaltsgerätebauteils sehr hoch.

Insbesondere werden die erste Schicht und die zweite Schicht mit einer gleichen Schichtdicke gespritzt. Die oben genannten Vorteile werden dadurch nochmals verbessert. Insbesondere wird vorgesehen, dass alle Schichten, mit denen das Haushaltsgerätebauteil gespritzt wird, mit gleicher Schichtdicke gespritzt werden. Unter einer gleichen Schichtdicke werden auch geringfügige Abweichungen der Schichtdicken zueinander verstanden, die innerhalb der Fertigungstoleranzen, DIN-Normen, etc. liegen.

Bei einer vorteilhaften Ausführung wird auf die zweite Schicht eine dritte Schicht aufgespritzt. Diese Erhöhung der Schichtenzahl, aus denen das Haushaltsgerätebauteil zumindest bereichsweise ausgebildet wird, kann die gesamte Schichtdicke nochmals erhöht werden und dennoch die oben genannten Vorteile erreicht werden.

Vorzugsweise wird vorgesehen, dass die dritte Schicht mit einer Schichtdicke größer 2 mm, insbesondere zwischen größer 2 mm und 3 mm, gespritzt wird. Vorzugsweise wird die dritte Schicht mit einer Schichtdicke zwischen 2,2 mm und 2,8 mm, insbesondere zwischen 2,3 mm und 2,7 mm, insbesondere zwischen 2,4 mm und 2,6 mm, gespritzt.

Bei einer vorteilhaften Ausführung werden die erste Schicht und die dritte Schicht mit gleicher Schichtdicke gespritzt und/oder die zweite Schicht und die dritte Schicht werden mit gleicher Schichtdicke gespritzt. Die diesbezüglich erreichbaren Vorteile wurden bereits oben bei der Erläuterung bezüglich der ersten und der zweiten Schicht angegeben.

Bei einer vorteilhaften Ausführung wird das Haushaltsgerätebauteil mit allen Schichten mit einem Spritzgusswerkzeug gespritzt, wobei nach dem Abkühlen der ersten Schicht die Kavität des Spritzgusswerkzeugs vergrößert wird, und dann zumindest die zweite Schicht gespritzt wird. Dadurch ist ein Wechsel des Spritzgusswerkzeugs nicht erforderlich und lediglich durch einfache Verstellung der die Kavität des Spritzgusswerkzeugs bildenden Spritzgusswerkzeugbauteile das individuell erforderliche Volumen dann eingestellt.

Es kann vorgesehen sein, dass bei einer weiteren alternativen Ausführung das Haushaltsgerätebauteil mit maximal n (n ≥2) Schichten gespritzt wird und mit einer Anzahl von maximal n-1 Schichten in einem ersten Spritzgusswerkzeug gespritzt wird und nach dem Abkühlen aus dem ersten Spritzgusswerkzeug in ein zweites Spritzgusswerkzeug eingebracht wird und zumindest eine weitere Schicht der n Schichten in einem zum ersten unterschiedlichen zweiten Spritzgusswerkzeug gespritzt wird. Dadurch kann auf individuelle Anforderungen an das herzustellende Haushaltsgerätebauteil bezüglich der Schichtenanzahl und/oder bezüglich der jeweiligen Schichtdicken und/oder bezüglich der jeweiligen Flächenbereiche, mit welchen individuelle Schichten zueinander erstellt werden sollen und/oder bezüglich Kunststoffmaterialien, die für die jeweiligen Schichten herangezogen werden, präzise eingegangen werden.

In einer vorteilhaften Ausführung kann vorgesehen sein, dass zumindest eine Schicht der Gesamtzahl der Schichten, aus denen das Haushaltsgerätebauteil gespritzt wird, aus einem ersten Kunststoffmaterial gespritzt wird, und zumindest eine weitere Schicht der Gesamtzahl der Schichten aus einem zum ersten Kunststoffmaterial unterschiedlichen zweiten Kunststoffmaterial gespritzt wird, wobei sich die Kunststoffmaterialien bezüglich dem Kunststofftyp und/oder der Kunststofffarbe unterscheiden. Dadurch kann ganz individuellen Anforderungen zur Herstellung des Haushaltsgerätebauteils Rechnung getragen werden.

Die Informationen können Buchstaben und/oder Zahlen und/oder Symbole umfassen.

Vorzugsweise wird vorgesehen, dass zumindest zwei Schichten des Schichtenverbunds, aus dem das Haushaltsgerätebauteil zumindest bereichsweise gespritzt wird, mit unterschiedlichen Flächengrößen erzeugt werden. Dies bedeutet, dass das Haushaltsgerätebauteil dann entsprechend lokal und partiell mit einer unterschiedlichen Anzahl von Schichten ausgebildet wird. Dies bedeutet auch, dass beispielsweise eine zweite Schicht und/oder eine dritte Schicht über einen kleineren Flächenbereich ausgebildet werden, können als die erste Schicht. Dadurch kann wiederum sehr individuellen Anforderungen an die Ausgestaltung des Haushaltsgerätebauteils Rechnung getragen werden.

Vorzugsweise wird als Haushaltsgerätebauteil ein Sichtbauteil eines Haushaltsgeräts, beispielsweise ein Türabsteller für ein Haushaltskältegerät oder eine Lebensmittel-Aufnahmeschale, wie eine Gemüseschale oder eine Gefrierschale, gespritzt.

Das Haushaltsgerät ist ein Haushaltsgerät zum Lagern und Konservieren von Lebensmitteln, wie beispielsweise ein Kühlgerät oder ein Gefriergerät oder ein Kühl-Gefrier-Kombigerät. Das Haushaltsgerät kann jedoch beispielsweise auch zur Pflege von Wäschestücken ausgebildet sein und eine Waschmaschine oder ein Wäschetrockner oder ein Waschtrockner sein. Auch kann das Haushaltsgerät ein Geschirrspüler sein. Ebenso kann das Haushaltsgerät zum Zubereiten von Lebensmitteln ausgebildet sein und beispielsweise ein Mikrowellengargerät oder ein Dampfgargerät sein.

Des Weiteren betrifft die Erfindung auch ein Haushaltsgerätebauteil für ein Haushaltsgerät, welches ein Spritzguss-Haushaltsgerätebauteil aus Kunststoff ist. Das Haushaltsgerätebauteil weist als erste Schicht einen Vorspritzling auf, auf dem zumindest eine zweite Schicht aufgespritzt ist. Das Haushaltsgerätebauteil ist als Dickwand-Spritzgussbauteil gespritzt, bei welchem die erste Schicht mit einer Schichtdicke größer 2 mm, insbesondere zwischen größer 2 mm und 3 mm gespritzt ist, und/oder die zweite Schicht mit einer Schichtdicke größer 2 mm, insbesondere zwischen größer 2 mm und 3 mm, gespritzt ist. Das Dickwand-Spritzgussbauteil in Form des Haushaltsgerätebauteils weist zumindest im Bereich der zumindest mehreren Schichten, aus denen es gespritzt ist, eine Gesamtschichtdicke von größer 4 mm auf.

Vorteilhafte Ausführungen des erfindungsgemäßen Verfahrens sind als vorteilhafte Ausführungen des Haushaltsgerätebauteils anzusehen, wobei durch die jeweiligen Verfahrensschritte die dann jeweils gegenständlichen Merkmale des Haushaltsgerätebauteils entstehen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Haushaltsgeräts mit zumindest einem Ausführungsbeispiel eines erfindungsgemäßen Haushaltsgerätebauteils;
- Fig. 2: eine vereinfachte Darstellung eines Haushaltsgerätebauteils, welches aus nur zwei Schichten gespritzt ist;
- Fig. 3: eine schematische Darstellung eines Teilbereichs eines Haushaltsgerätebauteils, welches zumindest bereichsweise aus zumindest drei unterschiedlichen Schichten gespritzt ist, wobei die drei Schichten unterschiedlich sind;
- Fig. 4: eine Darstellung gemäß Fig. 3, bei welcher zwei Schichten gleich sind;
- Fig. 5: eine vereinfachte Darstellung eines Herstellungsvorgangs eines Haushaltsgerätebauteils; und
- Fig. 6: eine vereinfachte Darstellung eines Haushaltsgerätebauteils gemäß der zweiten Vorgehensweise.

In den Figuren werden gleiche oder funktionsgleiche Elemente mit den gleichen Bezugszeichen versehen.

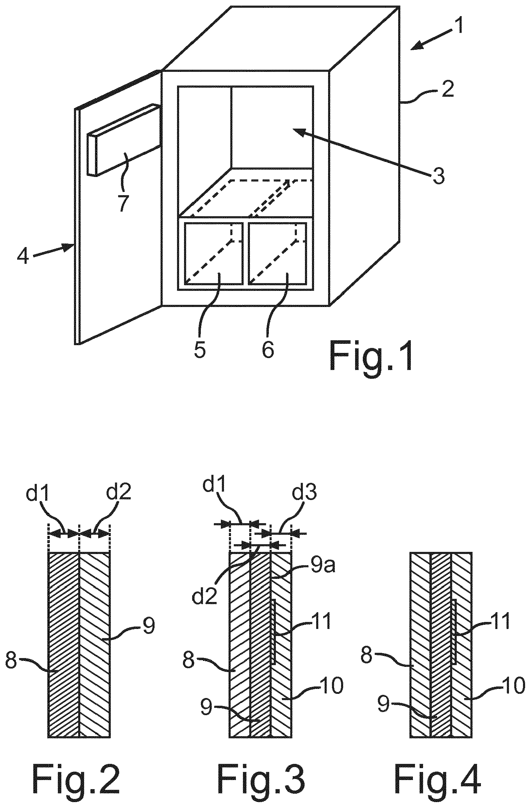

In Fig. 1 ist in einer vereinfachten Darstellung ein Haushaltsgerät 1 gezeigt, welches ein Haushaltskältegerät ist und zur Aufnahme von Lebensmitteln ausgebildet ist. Das Haushaltsgerät 1 umfasst ein Gehäuse 2, in dem zumindest ein Aufnahmeraum 3 zum Lagern und Konservieren von Lebensmitteln ausgebildet ist. In dem Aufnahmeraum 3, der frontseitig durch eine Tür 4 verschließbar ist, die schwenkbar an dem Gehäuse 2 angeordnet ist, sind in Position, Formgebung und Anzahl lediglich beispielhaft zu verstehen, zwei separate Lebensmittel-Aufnahmeschubladen 5 und 6 angeordnet. Diese können in Tiefenrichtung bewegt werden und somit hin und her geschoben werden. Das Haushaltsgerät 1 kann ein Kühlgerät oder ein Gefriergerät oder ein Kühl-Gefrier-Kombigerät sein. Die Lebensmittel-Aufnahmeschubladen 5 und 6 sind vorzugsweise Schalen, die von oben zugänglich sind, wenn sie insbesondere herausgezogen sind. Die Lebensmittel können somit insbesondere von oben in diese Lebensmittel-Aufnahmeschubladen 5 und 6 eingebracht werden. Diese Lebensmittel-Aufnahmeschubladen 5 und 6 können beispielsweise Gefrierschalen oder Gemüseschalen sein. Die Lebensmittel-Aufnahmeschubladen 5 und 6 sind jeweils einstückig aus Kunststoff ausgebildet. Sie stellen Haushaltsgerätebauteile dar.

Darüber hinaus ist an einer Innenseite und einer somit im geschlossenen Zustand der Tür 4 dem Aufnahmeraum 3 zugewandten Seite ebenfalls in Position, Ausgestaltung und Formgebung lediglich beispielhaft zu verstehen, ein weiteres Haushaltsgerätebauteil in Form eines Türabstellers 7 gezeigt. Auch dieser Türabsteller 7 ist vorzugsweise einstückig aus Kunststoff hergestellt. Der Türabsteller 7 und/oder die Lebensmittel-Aufnahmeschubladen 5 und/oder 6 sind als Spritzguß-Bauteile hergestellt und sind zumindest bereichsweise insbesondere vollständig aus mehreren Schichten erzeugt. Das jeweilige Haushaltsgerätebauteil ist als Dickwand-Bauteil gespritzt, was insbesondere bedeutet, dass insbesondere an den Stellen, an denen mehrere Schichten gespritzt sind, insbesondere an allen Stellen, die Schichtdicke größer 4 mm, insbesondere größer oder gleich 5 mm, beträgt.

In Fig. 2 ist in einer Teildarstellung ein Schnitt durch ein Ausführungsbeispiel eines Haushaltsgerätebauteils gemäß der Erfindung gezeigt. In dieser Ausgestaltung sind eine erste Schicht 8 und eine darauf aufgebrachte zweite Schicht 9 ausgebildet. Die erste Schicht 8 weist vorzugsweise eine Schichtdicke d1 größer 2 mm, insbesondere zwischen größer 2 mm und 3 mm, auf. Die zweite Schicht 9 weist insbesondere eine Schichtdicke d2 von größer 2 mm, insbesondere zwischen größer 2 mm und 3 mm, auf. Die gesamte Schichtdicke der Schichten 8 und 9 beträgt größer 4 mm.

In Fig. 3 ist in einer entsprechenden schematischen Darstellung eine Ausführung gezeigt, bei welcher das Haushaltsgerätebauteil drei Schichten 8, 9 und 10 aufweist, die aufeinander aufgespritzt sind. Die dritte Schicht 10 weist insbesondere eine Schichtdicke d3 auf, die größer 2 mm, insbesondere zwischen größer 2 mm und 3 mm beträgt. Die dritte Schichtdicke 10 ist dabei die äußere Schicht des Haushaltsgerätebauteils und somit die nach außen hin dargelegte Abschlussschicht. Die Schichten 8 und 9 weisen insbesondere die Schichtdicken d1 und d2 mit den zu Fig. 2 genannten Werten auf.

Es kann in einer vorteilhaften Ausführung vorgesehen sein, dass auf der nicht äußeren Schicht, die hier die zweite Schicht 9 ist, eine Bedruckung 11 an einer Oberseite 9a, die der dann folgenden zumindest einen weiteren Schicht, nämlich der dritten Schicht 10, zugewandt ist, aufgebracht ist. Die Bedruckung 11 ist insbesondere eine Informationsdarstellung und kann Buchstaben und/oder Zahlen und/oder Symbole aufweisen.

Anstelle der Bedruckung 11 kann auch ein bereits fertiges gegenständliches Zusatzteil auf die Oberseite 9a aufgebracht werden, insbesondere aufgeklebt werden. Ebenso kann vorgesehen sein, dass ein entsprechendes Zusatzmaterial auf die Oberseite 9a oder eine Vertiefung, die in der Oberseite 9a ausgebildet ist, aufgebracht ist. Wie zu erkennen ist, ist diese Bedruckung 11 oder dann auch ein Zusatzteil oder ein Zusatzmaterial vollständig von der dann nach außen folgenden zumindest einen weiteren Schicht, hier die dritte Schicht 10, bedeckt.

Bei der Ausgestaltung gemäß Fig. 3 sind die drei Schichten 8, 9 und 10 unterschiedlich, insbesondere im Hinblick auf das Kunststoffmaterial. Dies bedeutet, dass sie unterschiedlich insbesondere bezüglich des verwendeten Kunststofftyps und/oder bezüglich der Kunststofffarbe sind.

In Fig. 4 ist ein weiteres Ausführungsbeispiel gezeigt, bei welchem im Unterschied zur Ausgestaltung gemäß Fig. 3 die erste Schicht 8 und die dritte Schicht 10 gleich ausgebildet sind, wohingegen die zweite Schicht 9 dazu aus einem unterschiedlichen Kunststoffmaterial und somit bezüglich der Kunststofffarbe und/oder des Kunststofftyps unterschiedlich ist.

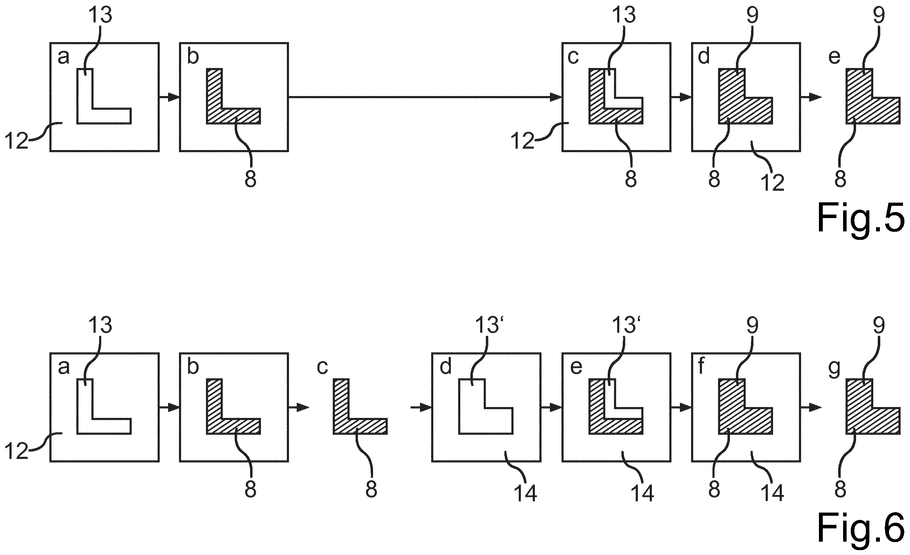

In Fig. 5 ist in einer vereinfachten Darstellung ein erster Herstellungsprozess eines derartigen mehrschichtig spritzgegossenen Haushaltsgerätebauteils als Dickwand-Bauteil gezeigt. Es wird zunächst gemäß der Darstellung a ein Spritzgusswerkzeug 12 bereitgestellt, welches eine Kavität 13 aufweist, die in Form und Größe einer ersten Schicht, welche das Haushaltsgerätebauteil aufweisen soll, entspricht. Es wird dann gemäß der nachfolgenden Darstellung b die Schmelze in die Kavität 13 eingebracht und entsprechend vollständig gefüllt. Es wird dann ein Abkühlen vorgenommen. Ist das Abkühlen erfolgt, wird diese eine Kavität 13 erweitert, indem das eine Spritzgusswerkzeug 12 mit einem Spritzgusswerkzeugbauteil verändert wird, so dass die Vergrößerung der Kavität 13 auftritt. Es ist dann zu erkennen, dass die erste Schicht 8 bereits erstarrt vorliegt und die Kavität 13 um das Volumen vergrößert wird, welche dann der zweiten Schicht 9 entspricht, wie dies in Darstellung c gezeigt ist.

Im Nachfolgenden wird dann gemäß der Darstellung d wiederum Schmelze in die Kavität 13 eingebracht und zwar derart, dass die Schicht 9 entsteht. Ist dann hier auch wiederum ein entsprechendes Abkühlen erfolgt, wird gemäß der Darstellung e bezüglich dem Ablauf in Fig. 5 das gefertigte Haushaltsgerätebauteil aus dem Spritzgusswerkzeug 12 entnommen.

In Fig. 6 ist ein weiteres Prozedere gezeigt, bei welchem die Fertigung in zumindest zwei unterschiedlichen Spritzgusswerkzeugen erfolgt. So wird das halb fertige Haushaltsgerätebauteil nach dem Herstellen mit der ersten Schicht 8 und dem in dem ersten Spritzgusswerkzeug 12 erfolgenden Abkühlen und Aushärten daraus entnommen (Darstellung c) und in ein dann unterschiedliches zweites Spritzgusswerkzeug 14 eingebracht (Darstellung d, e), welches eine größere Kavität 13' aufweist. Diese größere Kavität 13' weist dann das Volumen der ersten Schicht 8 zuzüglich dem Volumen, welches für eine zweite Schicht 9 erforderlich ist, auf. Nachfolgend wird dann die Schmelze der zweiten Schicht 9 eingebracht (Darstellung f) und wenn dieses fertige Element dann wiederum ausgehärtet ist, wird es gemäß der Darstellung g aus dem zweiten Spritzgusswerkzeug 14 entnommen.

Die Ausführungsbeispiele gemäß Fig. 5 und Fig. 6 wurden für Haushaltsgerätebauteile mit zwei separaten Schichten, die gespritzt werden, dargelegt. Selbstverständlich können diesbezüglich auch drei und mehr Schichten erzeugt werden, wobei einerseits dann entweder die Kavität eines einzigen Spritzgusswerkzeugs sukzessive erhöht wird oder zumindest für einige Schichten ein Wechsel des hergestellten Halbzeugs oder das Einsetzen in ein weiteres anderes Spritzgusswerkzeug durchgeführt wird.

### Bezugszeichenliste

- 1: Haushaltsgerät
- 2: Gehäuse
- 3: Aufnahmeraum
- 4: Tür
- 5: Lebensmittel-Aufnahmeschublade
- 6: Lebensmittel-Aufnahmeschublade
- 7: Türabsteller
- 8: erste Schicht
- 9: zweite Schicht
- 9a: Oberseite
- 10: dritte Schicht
- 11: Bedruckung
- 12: Spritzgusswerkzeug
- 13: Kavität
- 13': Kavität
- 14: Spritzgusswerkzeug
- d1: Schichtdicke
- d2: Schichtdicke
- d3: Schichtdicke

## Patentansprüche

1. Verfahren zum Herstellen eines Haushaltsgerätebauteils (5, 6, 7) aus Kunststoff durch ein Spritzgießen, bei welchem ein Vorspritzling als erste Schicht (8) erzeugt wird und auf die erste Schicht (8) zumindest eine zweite Schicht (9) aufgespritzt wird, wobei das Haushaltsgerätebauteil (5, 6, 7) als Dickwand-Bauteil gespritzt wird, bei welchem die erste Schicht (8) mit einer Schichtdicke (d1) größer 2 mm und/oder die zweite Schicht (9) mit einer Schichtdicke (d2) größer 2 mm gespritzt wird, **dadurch gekennzeichnet, dass** auf einer Oberseite (9a) einer nicht äußeren Schicht (9) des Schichtenverbunds, aus dem das Haushaltsgerätebauteil (5, 6, 7) gespritzt wird, eine Bedruckung (11) aufgebracht wird, und auf die Bedruckung (11) und die Oberseite (9a) zumindest eine weitere Schicht (10) des Schichtenverbunds aufgespritzt wird und/oder auf die Oberseite (9a) der nicht äußeren Schicht (9) des Schichtenverbunds, aus dem das Haushaltsgerätebauteil (5, 6, 7) gespritzt wird, ein fertiges Zusatzteil fixiert wird, welches erhaben über die Oberseite (9a) übersteht, und auf das Zusatzteil und die Oberseite (9a) zumindest eine weitere Schicht (10) des Schichtenverbunds aufgespritzt wird und/oder in der Oberseite (9a) der nicht äußeren Schicht (9) des Schichtenverbunds, aus dem das Haushaltsgerätebauteil (5, 6, 7) gespritzt wird, eine Vertiefung erzeugt wird, in welche ein Zusatzmaterial eingebracht wird, und auf das Zusatzmaterial und die Oberseite (9a) zumindest eine weitere Schicht (10) des Schichtenverbunds aufgespritzt wird.

2. Verfahren nach Anspruch 1, **dadurch gekennzeichnet, dass** die erste Schicht (8) mit einer Schichtdicke (d1) zwischen größer 2 mm und 3 mm und die zweite Schicht (9) mit einer Schichtdicke (d2) zwischen größer 2 mm und 3 mm gespritzt wird.

3. Verfahren nach Anspruch 1 oder 2, **dadurch gekennzeichnet, dass** die erste Schicht (8) und die zweite Schicht (9) mit einer gleichen Schichtdicke gespritzt werden.

4. Verfahren nach einem der vorhergehenden Ansprüche, **dadurch gekennzeichnet, dass** auf die zweite Schicht (9) eine dritte Schicht (10) aufgespritzt wird.

5. Verfahren nach Anspruch 4, **dadurch gekennzeichnet, dass** die dritte Schicht (10) mit einer Schichtdicke (d3) größer 2 mm, insbesondere zwischen größer 2 mm und 3 mm, gespritzt wird.

6. Verfahren nach Anspruch 4 oder 5, **dadurch gekennzeichnet, dass** die erste Schicht (8) und die dritte Schicht (10) mit gleicher Schichtdicke gespritzt werden und/oder die zweite Schicht (9) und die dritte Schicht (10) mit gleicher Schichtdicke gespritzt werden.

7. Verfahren nach einem der vorhergehenden Ansprüche, **dadurch gekennzeichnet, dass** das Haushaltsgerätebauteil (5, 6, 7) mit allen Schichten (8, 9, 10) in einem Spritzgusswerkzeug (12) gespritzt wird, wobei nach dem Abkühlen der ersten Schicht (8) die Kavität (13) des Spritzgusswerkzeugs (12) vergrößert wird und dann zumindest die zweite Schicht (9) gespritzt wird.

8. Verfahren nach einem der Ansprüche 1 bis 6, **dadurch gekennzeichnet, dass** das Haushaltsgerätebauteil mit maximal n Schichten (8, 9, 10) gespritzt wird und mit einer Anzahl von maximal n-1 Schichten (8, 9, 10) in einem ersten Spritzgusswerkzeug (12) gespritzt wird und nach dem Abkühlen aus dem ersten Spritzgusswerkzeug (12) entnommen und in ein zweites Spritzgusswerkzeug (14) eingebracht wird und zumindest eine weitere Schicht (9, 10) der n Schichten (8, 9, 10) in dem zum ersten unterschiedlichen zweiten Spritzgusswerkzeug (14) gespritzt wird.

9. Verfahren nach einem der vorhergehenden Ansprüche, **dadurch gekennzeichnet, dass** zumindest eine Schicht (8, 9, 10) der Gesamtzahl der Schichten (8, 9, 10), aus denen das Haushaltsgerätebauteil (5, 6, 7) gespritzt wird, aus einem ersten Kunststoffmaterial gespritzt wird, und zumindest eine weitere Schicht (8, 9, 10) der Gesamtzahl der Schichten (8, 9, 10) aus einem zum ersten Kunststoffmaterial unterschiedlichen zweiten Kunststoffmaterial gespritzt wird, wobei sich die Kunststoffmaterialien bezüglich dem Kunststofftyp und/oder der Kunststofffarbe unterscheiden.

10. Verfahren nach einem der vorhergehenden Ansprüche, **dadurch gekennzeichnet, dass** zumindest zwei Schichten (8, 9, 10) des Schichtenverbunds, aus dem das Haushaltsgerätebauteil (5, 6, 7) gespritzt wird, mit unterschiedlichen Flächengrößen erzeugt werden.

11. Verfahren nach einem der vorhergehenden Ansprüche, **dadurch gekennzeichnet, dass** als Haushaltsgerätebauteil (5, 6, 7) ein Sichtbauteil, insbesondere ein Türabsteller (7) für ein Haushaltskältegerät (1) oder eine Lebensmittel-Aufnahmeschublade (5, 6), gespritzt wird.

12. Haushaltsgerätebauteil (5, 6, 7) welches ein Spritzguss-Haushaltsgerätebauteil aus Kunststoff ist, und welches als erste Schicht (8) einen Vorspritzling aufweist, auf dem zumindest eine zweite Schicht (9) aufgespritzt ist, wobei das Haushaltsgerätebauteil (5, 6, 7) als Dickwand-Bauteil gespritzt ist, bei welchem die erste Schicht (8) mit einer Schichtdicke (d1) größer 2 mm und/oder die zweite Schicht (9) mit einer Schichtdicke (d2) größer 2 mm gespritzt ist **dadurch gekennzeichnet, dass** auf einer Oberseite (9a) einer nicht äußeren Schicht (9) des Schichtenverbunds, aus dem das Haushaltsgerätebauteil (5, 6, 7) gespritzt ist, eine Bedruckung (11) aufgebracht ist, und auf die Bedruckung (11) und die Oberseite (9a) zumindest eine weitere Schicht (10) des Schichtenverbunds aufgespritzt ist und/oder auf die Oberseite (9a) der nicht äußeren Schicht (9) des Schichtenverbunds, aus dem das Haushaltsgerätebauteil (5, 6, 7) gespritzt ist, ein fertiges Zusatzteil fixiert ist, welches erhaben über die Oberseite (9a) übersteht, und auf das Zusatzteil und die Oberseite (9a) zumindest eine weitere Schicht (10) des Schichtenverbunds aufgespritzt ist und/oder in der Oberseite (9a) der nicht äußeren Schicht (9) des Schichtenverbunds, aus dem das Haushaltsgerätebauteil (5, 6, 7) gespritzt ist, eine Vertiefung erzeugt ist, in welche ein Zusatzmaterial eingebracht ist, und auf das Zusatzmaterial und die Oberseite (9a) zumindest eine weitere Schicht (10) des Schichtenverbunds aufgespritzt ist.

## Claims

1. Method for producing a household appliance component (5, 6, 7) made from plastic by means of injection moulding, in which a pre-moulded part is produced as a first layer (8) and at least one second layer (9) is sprayed onto the first layer (8), wherein the household appliance component (5, 6, 7) is extruded as a thick wall component, in which the first layer (8) is extruded with a layer thickness (d1) of greater than 2 mm and/or the second layer (9) is extruded with a layer thickness (d2) of greater than 2 mm, **characterised in that** an imprint (11) is applied to a top side (9a) of a non-external layer (9) of the layer bond, from which the household appliance component (5, 6, 7) is extruded, and at least one further layer (10) of the layer bond is sprayed onto the imprint (11) and the top side (9a) and/or a finished additional part is fixed on the top side (9a) of the non-external layer (9) of the layer bond, from which the household appliance component (5, 6, 7) is extruded, which additional part projects above the top side (9a), and on which additional part and the top side (9a) at least one further layer (10) of the layer bond is sprayed, and/or a depression is produced in the top side (9a) of the non-external layer (9) of the layer bond, from which the household appliance component (5, 6, 7) is extruded, into which depression an additional material is introduced, and at least one further layer (10) of the layer bond is sprayed onto the additional material and the top side (9a).

2. Method according to claim 1, **characterised in that** the first layer (8) is extruded with a layer thickness (d1) between greater than 2 mm and 3 mm and the second layer (9) is extruded with a layer thickness (d2) between greater than 2 mm and 3 mm.

3. Method according to claim 1 or 2, **characterised in that** the first layer (8) and the second layer (9) are extruded with the same layer thickness.

4. Method according to one of the preceding claims, **characterised in that** a third layer (10) is sprayed onto the second layer (9).

5. Method according to claim 4, **characterised in that** the third layer (10) is extruded with a layer thickness (d3) of greater than 2 mm, in particular between greater than 2 mm and 3 mm.

6. Method according to claim 4 or 5, **characterised in that** the first layer (8) and the third layer (10) are extruded with the same layer thickness and/or the second layer (9) and the third layer (10) are extruded with the same layer thickness.

7. Method according to one of the preceding claims, **characterised in that** the household appliance component (5, 6, 7) is extruded with all layers (8, 9, 10) in an injection moulding tool (12), wherein after cooling the first layer (8), the cavity (13) of the injection moulding tool (12) is enlarged and at least the second layer (9) is then extruded.

8. Method according to one of claims 1 to 6, **characterised in that** the household appliance component is extruded with a maximum of n layers (8, 9, 10) and with a number of at most n-1 layers (8, 9, 10) in a first injection moulding tool (12), and is removed from the first injection moulding tool (12) after cooling down and is introduced into a second injection moulding tool (4) and at least one further layer (9, 10) of the n layers (8, 9, 10) is extruded in the second injection moulding tool (14) which differs from the first.

9. Method according to one of the preceding claims, **characterised in that** at least one layer (8, 9, 10) of the total number of layers (8, 9, 10), from which the household appliance component (5, 6, 7) is extruded, is extruded from a first plastic material, and at least one further layer (8, 9, 10) of the total number of layers (8, 9, 10) is extruded from a second plastic material which differs from the first plastic material, wherein the plastic materials differ with respect to plastic type and/or plastic colour.

10. Method according to one of the preceding claims, **characterised in that** at least two layers (8, 9, 10) of the layer bond, from which the household appliance (5, 6, 7) is extruded, are produced with different surface sizes.

11. Method according to one of the preceding claims, **characterised in that** a visible component, in particular a door tray (7) for a household refrigeration appliance (1) or a grocery drawer (5, 6), is extruded as a household appliance component (5, 6, 7).

12. Household appliance component (5, 6, 7), which is an injection-moulded household appliance component made from plastic, and which has a pre-moulded part as a first layer (8), on which at least one second layer (9) is sprayed, wherein the domestic appliance component (5, 6, 7) is extruded as a thick wall component, in which the first layer (8) with a layer thickness (d1) of greater than 2 mm and/or the second layer (9) with a layer thickness (d2) of greater than 2 mm is extruded, **characterised in that** an imprint (11) is applied to a top side (9a) of a non-external layer (9) of the layer bond, from which the household appliance component (5, 6, 7) is extruded, and at least one further layer (10) of the layer bond is sprayed onto the imprint (11) and the top side (9a) and/or a finished additional part is fixed on the top side (9a) of the non-external layer (9) of the layer bond, from which the household appliance component (5, 6, 7) is extruded, which additional part projects above the top side (9a) and at least one further layer (10) of the layer bond is sprayed onto the additional part and the top side (9a) and/or a depression is produced in the top side (9a) of the non-external layer (9) of the layer bond, from which the household appliance component (5, 6, 7) is extruded, into which depression an additional material is introduced and at least one further layer (10) of the layer bond is sprayed onto the additional material and the top side (9a).

## Revendications

1. Procédé de fabrication d'un composant d'appareil ménager (5, 6, 7) en plastique par un moulage par injection, dans lequel une ébauche est fabriquée en guise de première couche (8) et au moins une deuxième couche (9) est injectée sur la première couche (8), dans lequel le composant d'appareil ménager (5, 6, 7) est injecté sous la forme d'un composant à paroi épaisse, dans lequel la première couche (8) est injectée selon une épaisseur de couche (d1) supérieure à 2 mm et/ou la deuxième couche (9) est injectée selon une épaisseur de couche (d2) supérieure à 2 mm, **caractérisé en ce qu'**une impression (11) est apposée sur un côté supérieur (9a) d'une couche non extérieure (9) du composé de couches au départ duquel le composant d'appareil ménager (5, 6, 7) est injecté et au moins une couche supplémentaire (10) du composé de couches est injectée sur l'impression (11) et le côté supérieur (9a) et/ou une pièce additionnelle finie est fixée sur le côté supérieur (9a) de la couche non extérieure (9) du composé de couches au départ duquel le composant d'appareil ménager (5, 6, 7) est injecté, laquelle pièce additionnelle fait saillie en relief par rapport au côté supérieur (9a), et au moins une couche supplémentaire (10) du composé de couches est injectée sur la pièce additionnelle et le côté supérieur (9a) et/ou une concavité est constituée sur le côté supérieur (9a) de la couche non extérieure (9) du composé de couches au départ duquel le composant d'appareil ménager (5, 6, 7) est injecté, dans laquelle concavité un matériau additionnel est inséré, et au moins une couche supplémentaire (10) du composé de couches est injectée sur le matériau additionnel et le côté supérieur (9a).

2. Procédé selon la revendication 1, **caractérisé en ce que** la première couche (8) est injectée selon une épaisseur de couche (d1) située entre plus de 2 mm et 3 mm et la deuxième couche (9) est injectée selon une épaisseur de couche (d2) située entre plus de 2 mm et 3 mm.

3. Procédé selon la revendication 1 ou 2, **caractérisé en ce que** la première couche (8) et la deuxième couche (9) sont injectées selon une épaisseur de couche identique.

4. Procédé selon l'une des revendications précédentes, **caractérisé en ce qu'**une troisième couche (10) est injectée sur la deuxième couche (9).

5. Procédé selon la revendication 4, **caractérisé en ce que** la troisième couche (10) est injectée selon une épaisseur de couche (d3) supérieure à 2 mm, en particulier entre plus de 2 mm et 3 mm.

6. Procédé selon la revendication 4 ou 5, **caractérisé en ce que** la première couche (8) et la troisième couche (10) sont injectées selon une épaisseur de couche identique et/ou la deuxième couche (9) et la troisième couche (10) sont injectées selon une épaisseur de couche identique.

7. Procédé selon l'une des revendications précédentes, **caractérisé en ce que** le composant d'appareil ménager (5, 6, 7) est injecté selon toutes les couches (8, 9, 10) dans un outil de moulage par injection (12), dans lequel la cavité (13) de l'outil de moulage par injection (12) est agrandie après refroidissement de la première couche (8) et au moins la deuxième couche (9) est ensuite injectée.

8. Procédé selon l'une des revendications 1 à 6, **caractérisé en ce que** le composant d'appareil ménager est injecté avec maximum n couches (8, 9, 10) et avec un nombre maximal de n-1 couches (8, 9, 10) dans un premier outil de moulage par injection (12) et est ensuite retiré du premier outil de moulage par injection (12) après refroidissement et placé dans un deuxième outil de moulage par injection (14) et au moins une couche supplémentaire (9, 10) aux n couches (8, 9, 10) est injectée dans le deuxième outil de moulage par injection (14) différent du premier.

9. Procédé selon l'une des revendications précédentes, **caractérisé en ce qu'**au moins une couche (8, 9, 10) du nombre total de couches (8, 9, 10) au départ duquel le composant d'appareil ménager (5, 6, 7) est injecté, est injectée au départ d'un premier matériau plastique, et au moins une couche supplémentaire (8, 9, 10) du nombre total de couches (8, 9, 10) est injectée au départ d'un deuxième matériau plastique différent du premier matériau plastique, dans lequel les matériaux plastiques diffèrent quant au type de matière plastique et/ou à la couleur du plastique.

10. Procédé selon l'une des revendications précédentes, **caractérisé en ce qu'**au moins deux couches (8, 9, 10) du composé de couches au départ duquel le composant d'appareil ménager (5, 6, 7) est injecté, sont générées selon des surfaces différentes.

11. Procédé selon l'une des revendications précédentes, **caractérisé en ce que** le composant d'appareil ménager (5, 6, 7) injecté est un composant translucide, en particulier un rangement de porte (7) pour un appareil frigorifique ménager (1) ou un tiroir à denrées alimentaires (5, 6).

12. Composant d'appareil ménager (5, 6, 7) étant un composant d'appareil ménager en plastique moulé par injection et lequel présente une ébauche en guise de première couche (8) sur laquelle au moins une deuxième couche (9) est injectée, dans lequel le composant d'appareil ménager (5, 6, 7) est injecté sous la forme d'un composant à paroi épaisse, dans lequel la première couche (8) est injectée selon une épaisseur de couche (d1) supérieure à 2 mm et/ou la deuxième couche (9) est injectée selon une épaisseur de couche (d2) supérieure à 2 mm, **caractérisé en ce qu'**une impression (11) est apposée sur un côté supérieur (9a) d'une couche non extérieure (9) du composé de couches au départ duquel le composant d'appareil ménager (5, 6, 7) est injecté et au moins une couche supplémentaire (10) du composé de couches est injectée sur l'impression (11) et le côté supérieur (9a) et/ou une pièce additionnelle finie est fixée sur le côté supérieur (9a) de la couche non extérieure (9) du composé de couches au départ duquel le composant d'appareil ménager (5, 6, 7) est injecté, laquelle pièce additionnelle fait saillie en relief par rapport au côté supérieur (9a), et au moins une couche supplémentaire (10) du composé de couches est injectée sur la pièce additionnelle et le côté supérieur (9a) et/ou une concavité est constituée sur le côté supérieur (9a) de la couche non extérieure (9) du composé de couches au départ duquel le composant d'appareil ménager (5, 6, 7) est injecté, dans laquelle concavité un matériau additionnel est inséré, et au moins une couche supplémentaire (10) du composé de couches est injectée sur le matériau additionnel et le côté supérieur (9a).
